# EUROPEAN PATENT APPLICATION

(11) **EP 4 274 294 A1**
(43) Date of publication of application: **08.11.2023**
(21) Application number: 22742231.8
(22) Date of filing: 21.01.2022
(51) Int. Cl.: H04W 24/02

(54) **DATA TRANSMISSION METHOD, TERMINAL AND NETWORK SIDE DEVICE**

(30) Priority: 21.01.2021 CN 202110082984
(71) Applicant: Vivo Mobile Communication Co., Ltd., Dongguan, Guangdong 523863 (CN)
(72) Inventor: KANG, Yanchao, Dongguan, Guangdong 523863 (CN)
(74) Representative: Murgitroyd & Company
(86) International application number: PCT/CN2022/073061
(87) International publication number: WO 2022/156752

(57) **Abstract**

Embodiments of this application disclose a data transmission method, a terminal, and a network side device, and relate to the field of wireless communications technologies. The terminal determines computing power requirement information and sends the computing power requirement information to a first network node. The computing power requirement information indicates computing power resource information required when the terminal performs data transmission and/or data processing.

## Description

### CROSS-REFERENCE TO RELATED APPLICATIONS

This application claims priority to Chinese Patent Application No. 202110082984.2, filed with the China National Intellectual Property Administration on January 21, 2021 and entitled "DATA TRANSMISSION METHOD, TERMINAL, AND NETWORK SIDE DEVICE", which is incorporated herein by reference in its entirety.

### TECHNICAL FIELD

This application relates to the field of wireless communications technologies, and in particular, to a data transmission method, a terminal, and a network side device.

### BACKGROUND

For cloud computing, fog computing, edge computing, and the like, a computing power requirement and a computational process that are involved in the cloud computing, the fog computing, the edge computing, and the like are all enclosed in an application layer. That is, for the cloud computing, the fog computing, the edge computing, and the like, a dedicated application server needs to be deployed on a related device, so that all data computation occurs in the application layer. However, for the cloud computing, the fog computing, the edge computing, and the like, related cloud network fusion technologies thereof are still at a hard fusion stage, and have not implemented soft fusion of a transmission layer and the application layer (or a computational layer) at a logical level.

### SUMMARY

Embodiments of this application provide a data transmission method, a terminal, and a network side device, and can implement soft fusion of a transmission layer and an application layer (or a computational layer) at a logical level in cloud network fusion technologies.

According to a first aspect, a data transmission method is provided and performed by a terminal. The method includes: determining computing power requirement information, where the computing power requirement information indicates computing power resource information required when the terminal performs data transmission and/or data processing; and sending the computing power requirement information to a first network node.

According to a second aspect, a data transmission method is provided and performed by a first network node. The method includes: receiving computing power requirement information, where the computing power requirement information indicates computing power resource information required when a terminal performs data transmission and/or data processing; selecting a target computing power resource that satisfies the computing power requirement information and/or an identifier of a network element function that satisfies the target computing power resource from a preset computing power resource; and performing the data processing and/or the data transmission based on the target computing power resource and/or the identifier of the network element function.

According to a third aspect, a data transmission apparatus is provided. The apparatus includes: a determining module, configured to determine computing power requirement information, where the computing power requirement information indicates computing power resource information required when a terminal performs data transmission and/or data processing; and a first sending module, configured to send the computing power requirement information to a first network node.

According to a fourth aspect, a data transmission apparatus is provided. The apparatus includes: a receiving module, configured to receive computing power requirement information, where the computing power requirement information indicates computing power resource information required when a terminal performs data transmission and/or data processing; a processing module, configured to select a target computing power resource that satisfies the computing power requirement information and/or an identifier of a network element function that satisfies the target computing power resource from a preset computing power resource; and a transmission module, configured to perform the data processing and/or the data transmission based on the target computing power resource and/or the identifier of the network element function.

According to a fifth aspect, a terminal is provided, where the terminal includes a processor, a memory, and a program or an instruction stored in the memory and executable on the processor, and when the program or the instruction is executed by the processor, the steps of the method according to the first aspect are implemented.

According to a sixth aspect, a network side device is provided, where the network side device includes a processor, a memory, and a program or an instruction stored in the memory and executable on the processor, and when the program or the instruction is executed by the processor, the steps of the method according to the second aspect are implemented.

According to a seventh aspect, a readable storage medium is provided, where the readable storage medium stores a program or an instruction, and when the program or the instruction is executed by a processor, the steps of the method according to the first aspect are implemented, or the steps of the method according to the second aspect are implemented.

According to an eighth aspect, a chip is provided, where the chip includes a processor and a communications interface, the communications interface is coupled to the processor, and the processor is configured to run a program or an instruction of a network side device, to implement the steps of the method according to the first aspect or the steps of the method according to the second aspect.

According to a ninth aspect, a computer program product is provided, where the computer program product includes a processor, a memory, and a program or an instruction stored in the memory and executable on the processor, and when the program or the instruction is executed by the processor, the steps of the method according to the first aspect are implemented or the steps of the method according to the second aspect are implemented.

In the embodiments of this application, the terminal determines the computing power requirement information and then sends the computing power requirement information to the first network node, where the computing power requirement information indicates computing power resource information required when a terminal performs data transmission and/or data processing. Therefore, it is possible for the first network node to select or match an appropriate computing power resource for the terminal based on the received computing power requirement information to implement a parallel computational function when data transmission is implemented, thereby implementing cloud network soft fusion in which transmission and computation are carried out simultaneously.

### BRIEF DESCRIPTION OF DRAWINGS

FIG. 1 is a block diagram of a wireless communications system according to an embodiment of this application;
FIG. 2 is a schematic flowchart of a data transmission method according to an embodiment of this application;
FIG. 3 is a schematic flowchart of a data transmission method according to an embodiment of this application;
FIG. 4a is a schematic diagram of a logical structure of a terminal according to an embodiment of this application;
FIG. 4b, FIG. 4c, and FIG. 4d are schematic diagrams of a transmission process of computing power requirement information according to different embodiments of this application;
FIG. 4e is a schematic diagram of an update/registration process of a computing power resource according to an embodiment of this application;
FIG. 5 is a schematic diagram of a resource allocation process according to an embodiment of this application;
FIG. 6 is a schematic flowchart of a data transmission method according to an embodiment of this application;
FIG. 7 is a block diagram of a data transmission apparatus according to an embodiment of this application;
FIG. 8a is a block diagram of a data transmission apparatus according to another embodiment of this application;
FIG. 8b is a block diagram of a data transmission apparatus according to still another embodiment of this application;
FIG. 9 is a block diagram of a terminal according to an embodiment of this application; and
FIG. 10 is a block diagram of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in the description and the claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that the technology described in the embodiments of this application is not limited to a long term evolution (Long Time Evolution, LTE)/LTE-advanced (LTE-Advanced, LTE-A) system, and may also be used in various wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, a New Radio (New Radio, NR) system, that is, a 5G system is described below as an example, and the term NR is used in most of the descriptions, although these technologies can also be used in an application other than an application of the NR system, for example, a 5G evolved system, a 6th-generation (6th Generation, 6G) communications system, and 7G.

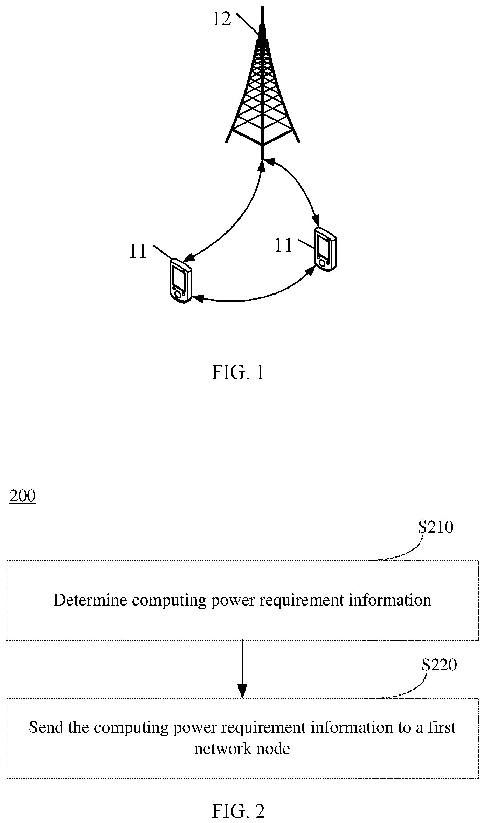

FIG. 1 is a block diagram of a wireless communications system to which an embodiment of this application can be applied. The wireless communications system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a bracelet, a headset, glasses, and the like. It should be noted that a specific type of the terminal 11 is not limited in this embodiment of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a WLAN access point, a Wi-Fi node, a transmitting receiving point (Transmitting Receiving Point, TRP), or some other appropriate term in the art. As long as the same technical effect is achieved, the base station is not limited to a specific technical term. The core network includes different logical functions, such as a mobility management entity (mobility management entity, MME), a serving gateway (serving gateway, SGW), a PDN gateway (PDN gateway, PGW), a home subscriber server (Home Subscriber Server, HSS), a policy and charging rules function (Policy and Charging Rules Function, PCRF), an access and mobility function (access and mobility function, AMF), a session management function (session management function, SMF), a user plane function (user plane function, UPF), a policy control function (policy control function, PCF), and a network data analysis function (Network data analysis function, NWDAF). The different logical functions or similar logical functions of the core network may serve as separate functional entities, or may be combined or divided into different functional entities. It should be noted that in the embodiments of this application, the base station in the NR system is used as only an example, but the base station is not limited to any specific type.

The following describes in detail the technical solutions provided in the embodiments of this application through specific embodiments and application scenarios thereof with reference to the accompanying drawings.

FIG. 2 is a schematic flowchart of a data transmission method 200 according to an embodiment of this application. The method 200 can be performed by a terminal. For example, the method can be performed by hardware and/or software installed in the terminal. In this embodiment, the method 200 may include the following steps.

S210: Determine computing power requirement information.

The computing power requirement information indicates computing power resource information required when the terminal performs data transmission and/or data processing. The data may be data involved in mathematical operations, image/picture processing, communication transmission, and other processes on an application layer or a service layer.

In this embodiment, an application scope of the computing power requirement information may include at least one of an application data flow, an application data packet, a session channel, and the terminal. The computing power requirement information is described below when the application scope of the computing power requirement information is the application data flow, the application data packet, the session channel, and the terminal separately.

It may be understood that in a case that the application scope of the computing power requirement information is the application data flow, the computing power requirement information is transmitted by using the application data flow as an applicable granularity. For example, one piece of the computing power requirement information only includes computing power requirement information corresponding to one data flow of one transmission target application. Correspondingly, the computing power requirement information is transmitted to a network together with data flow identification information to which the computing power requirement information is applied. In addition, there may be indication information in which current computing power requirement information is only applicable to a data flow (also referred to as a QoS flow, a service flow, or a bearer).

In a case that the application scope of the computing power requirement information is the application data packet, the computing power requirement information is transmitted by using the application data packet as an applicable granularity. For example, one piece of the computing power requirement information only includes computing power requirement information corresponding to one target application data packet. The corresponding computing power requirement information may include indication information in which the current computing power requirement information is only applicable to the application data packet.

In a case that the application scope of the computing power requirement information is the session channel, the computing power requirement information is transmitted by using the session channel as an applicable granularity. For example, one piece of the computing power requirement information only includes computing power requirement information corresponding to one target session channel. The corresponding computing power requirement information may include indication information in which the computing power requirement information is only applicable to the session channel.

In a case that the application scope of the computing power requirement information is the terminal, the computing power requirement information is transmitted by using the terminal as a transmission granularity. For example, one piece of the computing power requirement information may include all of requirement information needed when the terminal needs to perform data transmission or data processing. Without distinguishing applications, session channels, application data flows, application data packets, and the like corresponding to different data, the corresponding computing power requirement information may include indication information in which the computing power requirement information is only applicable to the terminal.

S220: Send the computing power requirement information to a first network node.

The first network node may be a network side device described in the foregoing wireless communications system, or may be network functional entities such as an AMF, an SMF, a UPF, and a base station (gNB). In addition, the first network node may also be integrated by one or more network nodes/network functional entities. This is not limited in the embodiments of this application.

It should be noted that regarding the foregoing computing power requirement information, the first network node and the terminal have a unified understanding of the computing power requirement information, such as a determining method of the computing power requirement information, so that normal operation of the data transmission and/or the data processing can be executed.

In this embodiment, the terminal determines the computing power requirement information and then sends the computing power requirement information to the first network node, where the computing power requirement information indicates computing power resource information required when a terminal performs data transmission and/or data processing. Therefore, it is possible for the first network node to select or match an appropriate computing power resource for the terminal based on the received computing power requirement information to implement a parallel computational function when data transmission is implemented, thereby implementing cloud network soft fusion in which transmission and computation are carried out simultaneously.

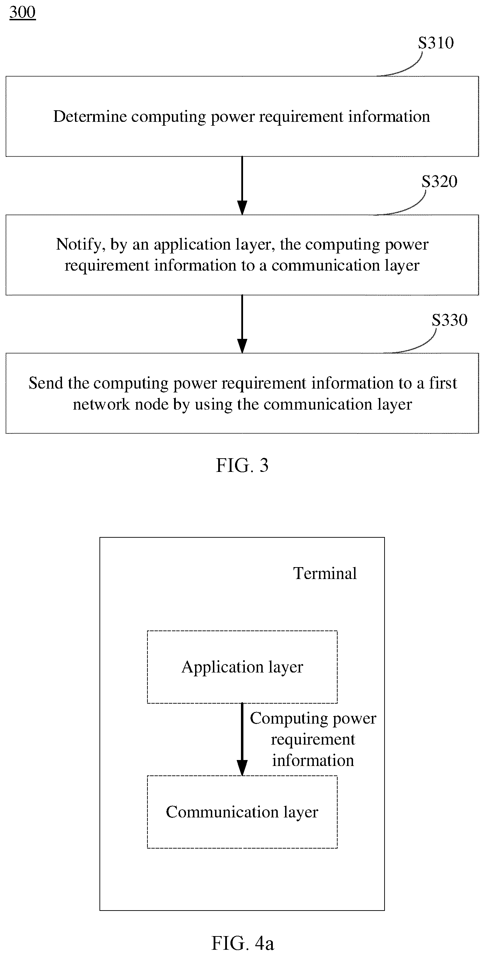

FIG. 3 is a schematic flowchart of a data transmission method 300 according to an embodiment of this application. The method 300 can be performed by a terminal. For example, the method can be performed by hardware and/or software installed in the terminal. In this embodiment, the method 300 may include the following steps.

S310: Determine computing power requirement information.

For an implementation process of S310, refer to the relevant description in the foregoing method 200. In addition, in a possible implementation, the implementation process of S310 may include the following S311 to S313.

S311: Determine a target computational requirement when the terminal performs the data transmission and/or the data processing.

The target computational requirement may be a situation of data that the terminal needs to compute and/or transmit. Using a service layer in the terminal as an example, the target computational requirement may be a communication resource, a computational resource, and the like that need to be provided by a network side when the service layer processes a service event. This is not limited herein.

S312: Obtain a basic computational unit corresponding to the target computational requirement.

The basic computational unit is a computational unit supported by a target network node. The target network node may be a first network node or another network node other than the first network node.

In an implementation, the first network node can send first information to the terminal, and the first information includes at least one basic computational unit supported by the first network node. Optionally, types of the basic computational unit may be basic mathematical operations (addition, subtraction, multiplication, and division), a convolution operation, image recognition, audio processing, video processing, augmented reality (Augmented Reality, AR)/virtual reality (Virtual Reality, VR) processing, neural network model training for machine learning, and the like.

S313: Break down the target computational requirement based on a type of the basic computational unit to obtain the computing power requirement information.

The computing power requirement information includes the type of the basic computational unit and a computational amount corresponding to the target computational requirement. For example, if the type of the basic computational unit is the image recognition, a corresponding computational amount may be 5 images, 10 images, ..., n images for the image recognition. If the type of the basic computational unit is a convolution operation, the corresponding computational amount may be 100, 1000, ..., or n convolution operations. If the type of basic computational unit is a neural network model training for machine learning, the corresponding computational amount may be 1, 20, ..., or n data sampling sets for the neural network model training.

S320: Notify, through an application layer, the computing power requirement information to a communication layer.

Referring to FIG. 4a, the terminal can sink the computing power requirement information of the application layer to a communication transmission layer (that is, the communication layer) by performing S320, and then send the computing power requirement information to the network side (that is, the first network node) by using a control plane or a user plane on the communication transmission layer.

In this case, in a possible implementation, an implementation process of "Notify, through an application layer, the computing power requirement information to a communication layer" described in S320 may include at least one of the following (1) to (3).

(1) The application layer transmits the computing power requirement information to the non-access stratum layer (non-access stratum, NAS layer) by using an AT command (AT command) or another multi-media interface (Multi-Media Interface, MMI). The MMI is an interface between a communications chip and a terminal device.

Timing of transmission by using the AT command may include, but is not limited to, the following (1a) or (1b).

(1a) When data transmission is performed on the application layer, an application scope of the computing power requirement information may be at a level of an application or a level of an application data flow.

(1b) Before the terminal is registered in the network, the application scope of the computing power requirement information is a terminal or an application.

(2) The application layer transmits the computing power requirement information by using a data packet header.

In a case that the computing power requirement information is transmitted by using the data packet header, the computing power requirement information is set in a reserved field or an extended field of the data packet header.

It should be noted that in the foregoing (2), a data packet transmitted by the control plane may also be included, and in the data packet header, the computing power requirement information can be extended and transmitted.

(3) The application layer transmits the computing power requirement information to the first computing power sensing layer, where the first computing power sensing layer is an upper layer of the NAS layer.

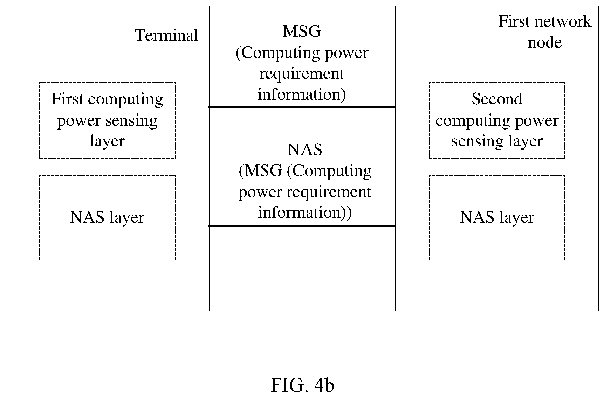

The first computing power sensing layer is a new layer (new layer) introduced in the communication layer of the terminal, and one of the first computing power sensing layer's main functions is to support the terminal for reporting the computing power requirement information to the network. As shown in FIG. 4b, the first computing power sensing layer may be an upper layer of the NAS layer. Correspondingly, a second computing power sensing layer may be introduced on the network side (such as the first network node and the second network node) as a peer layer of the first computing power sensing layer. Therefore, the terminal can transmit the computing power requirement information to the second computing power sensing layer on the network side by using the first computing power sensing layer.

It should be noted that the foregoing method in which the terminal sinks the computing power requirement information of the application layer to a communication transmission layer may include but is not limited to the foregoing (1) to (3). This is not limited in this embodiment.

S330: Send the computing power requirement information to a first network node through the communication layer.

For an implementation process of S330, refer to the relevant description of method 200. In addition, in a possible implementation, the implementation process of "send the computing power requirement information to a first network node through the communication layer" described in S330 may also include at least one of the following (1) to (3).
(1) The computing power requirement information is transmitted to the first network node by using a user-plane data packet.

An application scope of the transmitted computing power requirement information may be an application data flow or an application data packet. Correspondingly, the computing power requirement information should include indication of the application scope of the computing power requirement information, for example, a current data packet or a data flow to which the current data packet belongs.

In this embodiment, when the computing power requirement information is carried by using the packet header, one method is to use the reserved bit of the packet header to carry the computing power requirement information, and another method is to use the extended bit of the packet header to carry the computing power requirement information.

It should be noted that when the computing power requirement information is transmitted by using a user-plane data packet, computing power capability of a user-plane node can satisfy a current computational need of the transmitted data packet by using a method of self-updating (updating computing power software based on the computing power requirement). In addition, the user-plane node uses self-routing for transmission. For example, a next-hop network element is selected to perform a computational service for the transmitted data based on the computing power requirement (for example, the computing power requirement in the current packet header). This is not limited in this embodiment.

(2) The computing power requirement information is transmitted to the first network node by using an NAS message on a control plane.

If the application scope of the computing power requirement information may be a terminal, correspondingly, the NAS message carrying the computing power requirement information may be a mobility management message, for example, a registration message, a location update message, a mobility registration update message, and a dedicated uplink NAS message for transmitting the computing power requirement information.

In addition, if the application scope of the computing power requirement information is application, correspondingly, the NAS message carrying the computing power requirement information may be a session management message, for example, a session establishment message or a session modification message. The session management message is a message associated with a session transmitting specific application data.

It may be understood that if an endpoint of the NAS message is not the first network node, it can be reported to the first network node by a network entity that receives the NAS message.

(3) The computing power requirement information is transmitted to the first network node by using a first computing power sensing layer, where the first computing power sensing layer is an upper layer of an NAS layer in the terminal.

Referring to FIG. 4b again, the terminal transmits computing power requirement information to the first network node by using the new layer, that is, the first computing power sensing layer.

In an implementation, in a logical structure shown in FIG. 4b, the NAS layer and the new layer on the network side are located on a same network node (for example, the first network node), belonging to different logical layers of a same entity. The computing power requirement information of the terminal is transmitted to the first network node by using a new layer message encapsulated in the NAS message. After receiving the NAS message, the NAS layer of the first network node forwards the encapsulated new layer message (computing power requirement information) to the second computing power sensing layer (new layer) for processing.

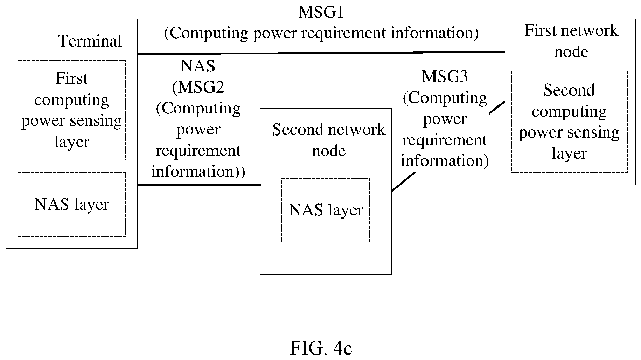

In another implementation, in a logical structure shown in FIG. 4c, the NAS layer and the new layer on the network side are located on different network nodes (for example, the second network node and the first network node), belonging to different logical layers of different entities. The computing power requirement information of the terminal is transmitted to the network side by using a new layer message 1 encapsulated in the NAS message. After receiving an NAS message 2, the NAS layer of the second network node forwards a new layer message (MSG) 2 encapsulated in a message 3 to the new layer of the first network node for processing.

It may be understood that in this implementation method, an interface (the message 3) between the first network node and the second network node may be a service based architecture (Service Based Architecture, SBA) interface or a traditional logic based interface. This is not limited herein.

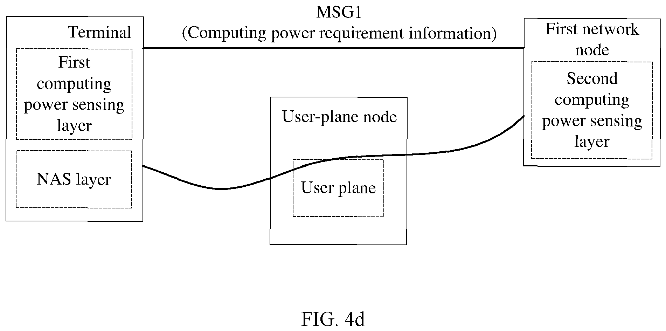

In another implementation, in a logical structure shown in FIG. 4d, the NAS layer on the network side is located on a certain network node, and the terminal may be connected to the first network node by establishing a user-plane channel. The computing power requirement information of the terminal is encapsulated in the new layer message 1 and then transmitted to the first network node. The MSG1 of the new layer is transmitted to the network as user interface data by using the user plane.

Corresponding to the transmission method in (1) to (3) described in S330, a process of receiving computing power requirement information by the first network node may also include at least one of the following (1) to (3).
(1) The computing power requirement information transmitted by using a user-plane data packet is received.
(2) The computing power requirement information transmitted by using a non-access stratum NAS message on a control plane is received.
(3) The computing power requirement information transmitted by using a first computing power sensing layer is received, where the first computing power sensing layer is an upper layer of an NAS layer in the terminal.

For the relevant description of the reception method described in (1) to (3), refer to the description of the sending method in S330. To avoid repetition, details are not described herein again.

Further, after receiving the computing power requirement information sent by the terminal, the first network node selects a target computing power resource that satisfies the computing power requirement information and/or an identifier of a network element function that satisfies the target computing power resource from a preset computing power resource, and performs the data processing and/or the data transmission based on the target computing power resource and/or the identifier of the network element function.

The preset computing power resource may be pre-configured in the first network node, and may also be configured in another network node. In this case, the first network node is obtained by performing computing power registration/update on a network function based on computing power registration/update information sent by the network function. For example, before selecting a target computing power resource that satisfies the computing power requirement information and/or an identifier of a network element function that satisfies the target computing power resource from a preset computing power resource, the first network node can receive computing power registration/update information sent by the network function, and perform computing power registration/update on the network function based on the computing power registration/update information.

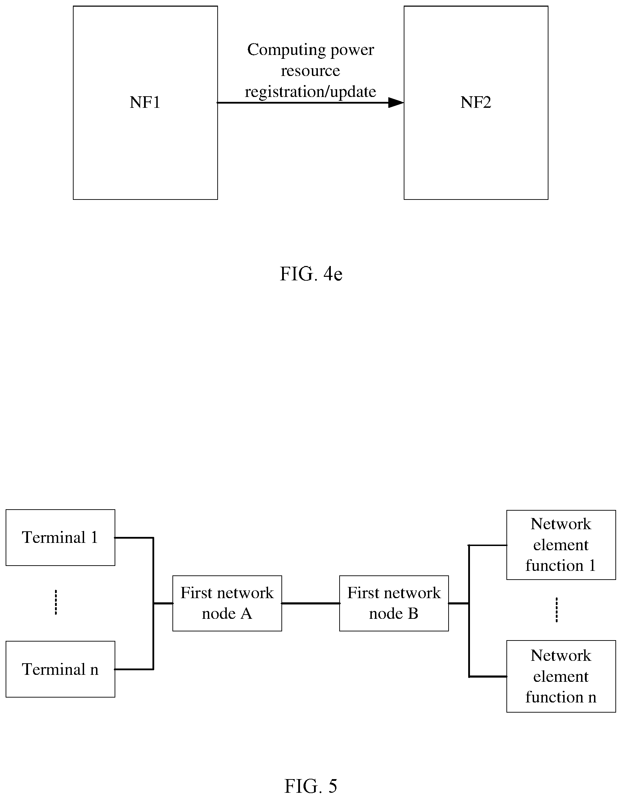

For example, refer to FIG. 4e. A network function/network function entity (as shown in an NF1 in FIG. 4e) having a computing power resource needs to perform computing power resource registration at a dedicated network function 2 (for example, an NF2 shown in FIG. 4e, which may be the first network node or another network node other than the first network node) when the network function/network function entity is configured to the network, or is started and restarted. The network function 2 may be a generic network function registration management entity, such as a network repository function (Network Repository Function, NRF) in 5G, or a network function registration management entity in 6G. The first network node can obtain distribution of computing power resources of different network functions in the current network from the NF2. When the NF 1 performs network function registration/update, the NF1 also completes registration/update of a computing power resource of a network element.

In addition, the computing power resource registration of the network function can also be registered at a network functional entity that is specially used to perform computing power resource registration. The network functional entity may belong to a service sensing layer or a computing power sensing layer of the network. This is not limited herein.

In an implementation, based on a difference of the first network node, an implementation process in which the first network node selects a target computing power resource that satisfies the computing power requirement information and/or an identifier of a network element function (may be understood as a data transmission node) that satisfies the target computing power resource from a preset computing power resource may be different, and may be applicable to different scenarios. The following makes description with reference to different scenarios. It is assumed that the first network node includes a network function selection node (for example, a terminal registration node and a session management function node) and a network element function registration and maintenance node (or a network computing power resource management node).

### Scenario 1

It is assumed that during a registration process of the terminal, a registration node selects a session management function node. In this case, the registration node performs a function of the network function selection node. The terminal sends the computing power requirement information to the registration node by using a mobility management message (for example, a registration message, an attach message, a TAU message, and a location update message). Then, the registration node sends an MSG to the network element function registration and maintenance node, so that the network element function registration and maintenance node can select a target computing power resource that satisfies the computing power requirement information and/or an identifier of a network element function that satisfies the target computing power resource from a preset computing power resource. The MSG may include the computing power requirement information, and may further include a network element function type (an NF type, for example, a session management function node), a slice type, and other information. In this case, the network element function registration and maintenance node can feedback an identifier of a session management node that satisfies the computing power requirement to the registration node. Optionally, the session management node may further satisfy the NF type and the slice type.

### Scenario 2

It is assumed that during a session management process of the terminal, a session management function node selects a gateway node. In this case, the session management function node performs a function of the network function selection node. The terminal sends the computing power requirement information to the session management function node by using a session management message (for example, a PDU session establishment process, and a PDU session modification process). Then, the session management function node sends an MSG to the network element function registration and maintenance node, so that the network element function registration and maintenance node can select a target computing power resource that satisfies the computing power requirement information and/or an identifier of a network element function that satisfies the target computing power resource from a preset computing power resource. The MSG may include the computing power requirement information, and may further include an NF type (for example, a gateway node). In this case, the network element function registration and maintenance node can feedback an identifier of a gateway node that satisfies the computing power requirement to the registration node. Optionally, the gateway node may further satisfy the NF type.

### Scenario 3

It is assumed that during the transmission process of control-plane data, a mobility management node selects a control-plane data processing node. In this case, the mobility management node performs a function of the network function selection node. UE sends the computing power requirement information to the mobility management node by using a mobility management message (for example, a registration message, an attach message, a TAU message, and a location update message). Then, the mobility management node sends an MSG to the network element function registration and maintenance node, so that the network element function registration and maintenance node can select a target computing power resource that satisfies the computing power requirement information and/or an identifier of a network element function that satisfies the target computing power resource from a preset computing power resource. The MSG may include the computing power requirement information, and may further include a network element function type (an NF type, for example, a control-plane data processing node). In this case, the network element function registration and maintenance node can feedback an identifier of a control-plane data processing node that satisfies the computing power requirement to the mobility management node. Optionally, the control-plane data processing node may further satisfy the NF type.

Further, the first network node (for example, the foregoing network function selection node) performs corresponding data transmission and/or data computation based on the selected target computing power resource and/or the network element function identifier that satisfies the target computing power resource.

In the foregoing embodiment, during or before the data transmission process of the terminal, the first network node comprehensively considers the computing power requirement information of the terminal and an available computing power resource on the network side, and selects a target computing power resource or/and a network function to satisfy the computing power requirement for the terminal to perform data transmission. In this way, data can be transmitted while computational requirement of the data is completed, thereby effectively implementing cloud network soft fusion in which transmission and computation are carried out simultaneously.

In addition, the first network node may further collect statistics of at least one piece of the received computing power requirement information; and based on a statistical result and a registered computing power resource of each network element function, allocate each network element function and/or a computing power resource corresponding to each network element function. The "allocation" may be to increase or decrease a computing power resource of one network element function, or to allocate a computing power resource of one network element function to another network element function for a plurality of network element nodes, so that the network element function after the allocation can better serve the terminal for data transmission/data computation.

In addition, the foregoing allocation of the computing power resource may be completed by the first network node independently, or may be completed by a plurality of first network nodes. For example, refer to FIG. 5. A first network node A can provide statistical information on a network computing power resource requirement for a certain region or period of time based on a large amount of computing power requirement information reported by the terminal, and feedback the statistical information of the network computing power resource requirement to a first network node B (for example, a network management system). The first network node B allocates a computing power resource for a network function based on the statistical information of the network computing power resource requirement.

In this embodiment, the terminal sinks the computing power requirement information on the application layer to the communication transmission layer, and then transmits the computing power requirement information to the network node by using the control plane or the user plane. The network node selects or matches data transmission nodes having appropriate computing power (for example, a network element function) based on the computing power requirement information on the control plane or the user plane to implement a parallel computational function when data transmission is implemented, thereby implementing cloud network soft fusion in which transmission and computation are carried out simultaneously.

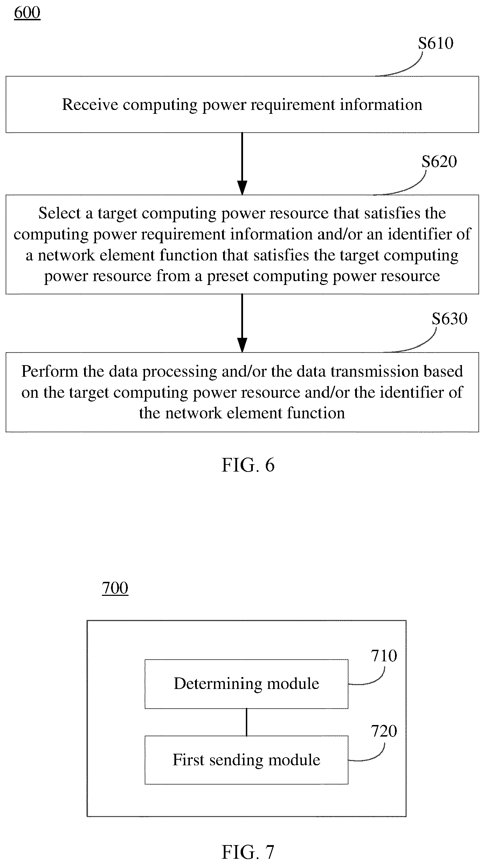

FIG. 6 is a schematic flowchart of a data transmission method 600 according to an embodiment of this application. The method 600 can be performed by a first network node. For example, the method can be performed by hardware and/or software installed in the first network node. In this embodiment, the method 600 may include the following steps.

S610: Receive computing power requirement information, where the computing power requirement information indicates computing power resource information required when a terminal performs data transmission and/or data processing.

S620: Select a target computing power resource that satisfies the computing power requirement information and/or an identifier of a network element function that satisfies the target computing power resource from a preset computing power resource.

S630: Perform the data processing and/or the data transmission based on the target computing power resource and/or the identifier of the network element function.

In a possible implementation of this application, In S610, the receiving computing power requirement information may include at least one of the following (1) to (3).
(1) The computing power requirement information transmitted by using a user-plane data packet is received.
(2) The computing power requirement information transmitted by using a non-access stratum NAS message on a control plane is received, where the NAS message is a mobility management message or a session management message.
(3) The computing power requirement information transmitted by using a first computing power sensing layer is received, where the first computing power sensing layer is an upper layer of an NAS layer in the terminal.

In the foregoing (3), the receiving computing power requirement information transmitted by using a first computing power sensing layer may include receiving, through a second computing power sensing layer, the computing power requirement information transmitted by using the first computing power sensing layer, where the second computing power sensing layer is an upper layer of an NAS layer in the first network node.

In another possible implementation of this application, In S610, the receiving computing power requirement information may include receiving computing power requirement information forwarded by a second network node, where the computing power requirement information is sent by the terminal to the second network node.

In another possible implementation of this application, before receiving the computing power requirement information, the first network node sends first information to the terminal, where the first information includes at least one basic computational unit supported by the first network node. The computing power requirement information includes a type of the basic computational unit and a computational amount corresponding to a target computational requirement, where the target computational requirement is a computational requirement when the terminal performs the data transmission and/or the data processing.

In another possible implementation of this application, before selecting a target computing power resource that satisfies the computing power requirement information and/or an identifier of a network element function that satisfies the target computing power resource from a preset computing power resource, the first network node can also receive computing power registration/update information sent by a network function, and perform computing power registration/update on the network function based on the computing power registration/update information.

In another possible implementation of this application, the first network node collects statistics of at least one piece of the received computing power requirement information; and based on a statistical result and a registered computing power resource of each network element function, allocates each network element function and/or a computing power resource corresponding to each network element function.

It should be noted that for the foregoing implementations provided in this embodiment refer to the relevant descriptions in the method 200 and the method 300. To avoid repetition, details are not described herein again.

In this embodiment, during or before the data transmission process of the terminal, the first network node comprehensively considers the computing power requirement information of the terminal and the available computing power resource on the network side, and selects the target computing power resource or/and the network function to satisfy the computing power requirement for the terminal to perform the data transmission. In this way, the data transmission can be implemented while the computational requirement of the data is completed, thereby effectively implementing cloud network soft fusion in which transmission and computation are carried out simultaneously.

It should be noted that an execution subject of the data transmission method 200, the data transmission method 300, and the data transmission method 600 according to an embodiment of this application may be a data transmission apparatus, or a control module for performing the data transmission method in the data transmission apparatus. In the subsequent embodiments of this application, the data transmission apparatus according to an embodiment of this application is described by using an example in which the data transmission apparatus performs the data transmission method.

FIG. 7 is a block diagram of a data transmission apparatus 700 according to an exemplary embodiment of this application. The apparatus 700 includes: a determining module 710, configured to determine computing power requirement information, where the computing power requirement information indicates computing power resource information required when a terminal performs data transmission and/or data processing; and a first sending module 720, configured to send the computing power requirement information to a first network node.

In a possible implementation of this application, the first sending module is configured to perform at least one of the following: transmitting the computing power requirement information to the first network node by using a user-plane data packet; transmitting the computing power requirement information to the first network node by using an NAS message on a control plane; and transmitting the computing power requirement information to the first network node by using a first computing power sensing layer, where the first computing power sensing layer is an upper layer of an NAS layer in the terminal.

In another possible implementation of this application, an application scope of the computing power requirement information includes at least one of the following: an application data flow, an application data packet, a session channel, and the terminal.

In another possible implementation of this application, the NAS message is a mobility management message or a session management message.

In another possible implementation of this application, the first sending module is further configured to notify, through an application layer, the computing power requirement information to a communication layer, and then perform a step of sending the computing power requirement information to the first network node by using the communication layer.

In another possible implementation of this application, the notifying a communication layer of the computing power requirement information by using an application layer includes at least one of the following: transmitting, by the application layer, the computing power requirement information to the NAS layer by using an AT command; transmitting, by the application layer, the computing power requirement information by using a data packet header; and transmitting, by the application layer, the computing power requirement information to the first computing power sensing layer, where the first computing power sensing layer is an upper layer of the NAS layer.

In another possible implementation of this application, in a case that the computing power requirement information is transmitted by using the data packet header, the computing power requirement information is set in a reserved field or an extended field of the data packet header.

In another possible implementation of this application, the determining module 710 is configured to: determine a target computational requirement when the terminal performs the data transmission and/or the data processing; obtain a basic computational unit corresponding to the target computational requirement, where the basic computational unit is a computational unit supported by the target network node; and break down the target computational requirement based on a type of the basic computational unit to obtain the computing power requirement information.

In another possible implementation of this application, the computing power requirement information includes the type of the basic computational unit and a computational amount corresponding to the target computational requirement.

The data transmission apparatus 700 in the embodiments of this application may be an apparatus, or a component, an integrated circuit, or a chip in a terminal. The apparatus may be a mobile terminal or a non-mobile terminal. For example, the mobile terminal may include but is not limited to the foregoing listed types of terminals 11. The non-mobile terminal may be a server, a network attached storage (Network Attached Storage, NAS), a personal computer (personal computer, PC), a television (television, TV), a teller machine, or a self-service machine. This is not specifically limited in this embodiment of this application.

The data transmission apparatus 700 in the embodiments of this application may be an apparatus with an operating system. The operating system may be an Android (Android) operating system, may be an iOS operating system, or may be another possible operating system. This is not specifically limited in this embodiment of this application.

The data transmission apparatus 700 provided in the embodiments of this application can implement the processes implemented in the method embodiments in FIG. 2 and FIG. 3, with the same technical effect achieved. To avoid repetition, details are not described herein again.

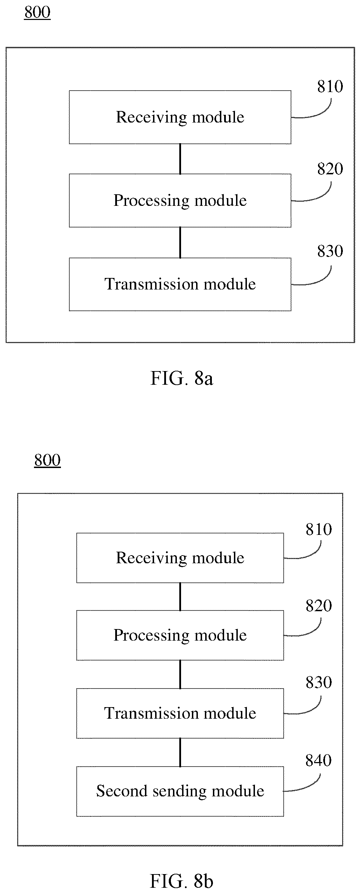

FIG. 8a is a block diagram of a data transmission apparatus 800 according to an embodiment of this application. The apparatus 800 includes: a receiving module 810, configured to receive computing power requirement information, where the computing power requirement information indicates computing power resource information required when a terminal performs data transmission and/or data processing; a processing module 820, configured to select a target computing power resource that satisfies the computing power requirement information and/or an identifier of a network element function that satisfies the target computing power resource from a preset computing power resource; and a transmission module 830, configured to perform the data processing and/or the data transmission based on the target computing power resource and/or the identifier of the network element function.

In a possible implementation of this application, the receiving module 810 is configured to perform at least one of the following: receiving the computing power requirement information transmitted by using a user-plane data packet; receiving the computing power requirement information transmitted by using an NAS message on a control plane; and receiving the computing power requirement information transmitted by using a first computing power sensing layer, where the first computing power sensing layer is an upper layer of an NAS layer in the terminal.

In another possible implementation of this application, the NAS message is a mobility management message or a session management message.

In another possible implementation of this application, the receiving module is configured to receive, through a second computing power sensing layer, the computing power requirement information transmitted by using the first computing power sensing layer, where the second computing power sensing layer is an upper layer of an NAS layer in the first network node.

In another possible implementation of this application, the receiving module is configured to receive computing power requirement information forwarded by a second network node, where the computing power requirement information is sent by the terminal to the second network node.

In another possible implementation of this application, an application scope of the computing power requirement information includes at least one of the following: an application data flow, an application data packet, a session channel, and the terminal.

In another possible implementation of this application, as shown in FIG. 8b, the apparatus 800 further includes: a second sending module 840, configured to send first information to the terminal, where the first information includes at least one basic computational unit supported by the first network node.

In another possible implementation of this application, the computing power requirement information includes a type of the basic computational unit and a computational amount corresponding to a target computational requirement, where the target computational requirement is a computational requirement when the terminal performs the data transmission and/or the data processing.

In another possible implementation of this application, the receiving module 810 is further configured to receive computing power registration/update information sent by a network function; and perform computing power registration/update on the network function based on the computing power registration/update information.

In another possible implementation of this application, the processing module 820 is further configured to collect statistics of at least one piece of the received computing power requirement information; and based on a statistical result and a registered computing power resource of each network element function, allocate each network element function and/or a computing power resource corresponding to each network element function.

The data transmission apparatus 800 in the embodiments of this application may be an apparatus, or a component, an integrated circuit, or a chip in a network side device. Alternatively,
the data transmission apparatus 800 in the embodiments of this application may be an apparatus with an operating system. The operating system may be an Android (Android) operating system, may be an iOS operating system, or may be another possible operating system. This is not specifically limited in this embodiment of this application.

The data transmission apparatus 800 provided in the embodiments of this application can implement the processes implemented in the method embodiments in FIG. 6, with the same technical effect achieved. To avoid repetition, details are not described herein again.

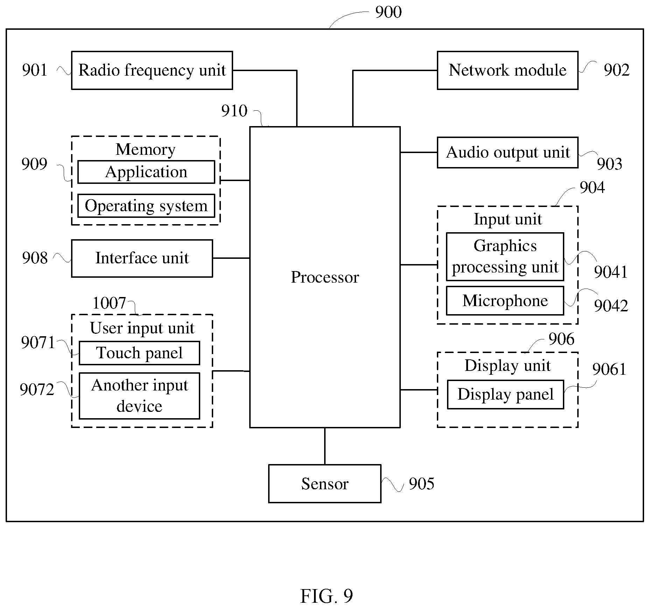

FIG. 9 is a schematic diagram of a hardware structure of a terminal for implementing the embodiments of this application. A terminal 900 includes but is not limited to components such as a radio frequency unit 901, a network module 902, an audio output unit 903, an input unit 904, a sensor 905, a display unit 906, a user input unit 907, an interface unit 908, a memory 909, and a processor 910.

A person skilled in the art can understand that the terminal 900 may further include a power supply (such as a battery) that supplies power to each component. The power supply may be logically connected to the processor 910 by using a power supply management system, to implement functions such as charging and discharging management, and power consumption management by using the power supply management system. The terminal structure shown in FIG. 9 constitutes no limitation on the terminal, and the terminal may include more or fewer components than those shown in the figure, or combine some components, or have different component arrangements. Details are not described herein.

It should be understood that, in this embodiment of this application, the input unit 904 may include a graphics processing unit (Graphics Processing Unit, GPU) 9041 and a microphone 9042, and the graphics processing unit 9041 processes image data of a still picture or a video obtained by an image capture apparatus (for example, a camera) in a video capture mode or an image capture mode. The display unit 906 may include a display panel 9061, and the display panel 9061 may be configured in a form of a liquid crystal display, an organic light-emitting diode, or the like. The user input unit 907 includes a touch panel 9071 and another input device 9072. The touch panel 9071 is also referred to as a touchscreen. The touch panel 9071 may include two parts: a touch detection apparatus and a touch controller. The another input device 9072 may include but is not limited to a physical keyboard, a functional button (such as a volume control button or a power on/off button), a trackball, a mouse, and a joystick. Details are not described herein.

In this embodiment of this application, the radio frequency unit 901 receives downlink data from a network side device and then sends the downlink data to the processor 910 for processing; and sends uplink data to the network side device. Usually, the radio frequency unit 901 includes but is not limited to an antenna, at least one amplifier, a transceiver, a coupler, a low noise amplifier, a duplexer, and the like.

The memory 909 may be configured to store a software program or an instruction and various data. The memory 909 may mainly include a program or an instruction storage area and a data storage area. The program or the instruction storage area may store an operating system, and an application program or an instruction required by at least one function (for example, a sound playing function or an image playing function). In addition, the memory 909 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 910 may include one or more processing units. Optionally, an application processor and a modem processor may be integrated into the processor 910. The application processor mainly processes an operating system, a user interface, an application, an instruction, or the like. The modem processor mainly processes wireless communications, for example, a baseband processor. It can be understood that, alternatively, the modem processor may not be integrated into the processor 910.

The processor 910 is configured to determine computing power requirement information, where the computing power requirement information indicates computing power resource information required when a terminal performs data transmission and/or data processing; and send the computing power requirement information to a first network node.

In the embodiments of this application, the terminal determines the computing power requirement information and then sends the computing power requirement information to the first network node, where the computing power requirement information indicates computing power resource information required when a terminal performs data transmission and/or data processing. Therefore, it is possible for the first network node to select or match an appropriate computing power resource for the terminal based on the received computing power requirement information to implement a parallel computational function when data transmission is implemented, thereby implementing cloud network soft fusion in which transmission and computation are carried out simultaneously.

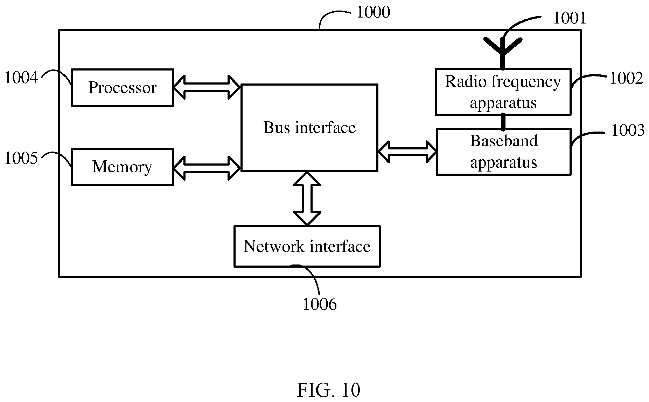

As shown in FIG. 10, an embodiment of this application further provides a network side device. The network side device 1000 includes an antenna 1001, a radio frequency apparatus 1002, and a baseband apparatus 1003. The antenna 1001 is connected to the radio frequency apparatus 1002. In an uplink direction, the radio frequency apparatus 1002 receives information through the antenna 1001, and sends the received information to the baseband apparatus 1003 for processing. In a downlink direction, the baseband apparatus 1003 processes to-be-transmitted information and transmits the information to the radio frequency apparatus 1002, and the radio frequency apparatus 1002 processes the received information and then transmits the information through the antenna 1001.

The foregoing band processing apparatus may be located in the baseband apparatus 1003. In the foregoing embodiment, a method performed by the network side device may be implemented in the baseband apparatus 1003. The baseband apparatus 1003 includes a processor 1004 and a memory 1005.

For example, the baseband apparatus 1003 may include at least one baseband board. A plurality of chips are disposed on the baseband board. As shown in FIG. 10, one chip is, for example, the processor 1004, and is connected to the memory 1005, to invoke a program in the memory 1005 to perform an operation of the network side device shown in the foregoing method embodiment.

The baseband apparatus 1003 may further include a network interface 1006, configured to exchange information with the radio frequency apparatus 1002, where the interface is, for example, a common public radio interface (common public radio interface, CPRI).

Specifically, the network side device in this embodiment of the present invention further includes an instruction or a program stored in the memory 1005 and executable on the processor 1004. The processor 1004 invokes the instruction or the program in the memory 1005 to perform the method performed by the modules shown in FIG. 8, with the same technical effect achieved. To avoid repetition, details are not provided herein again.

An embodiment of this application further provides a readable storage medium. The readable storage medium stores a program or an instruction. When the program or the instruction is executed by a processor, the processes in the foregoing data transmission method embodiments are implemented, and a same technical effect can be achieved. To avoid repetition, details are not described herein again.

The processor is a processor in the terminal in the foregoing embodiment. The readable storage medium includes a computer-readable storage medium such as a read-only memory (Read-Only Memory, ROM), a random access memory (Random Access Memory, RAM), a magnetic disk, an optical disc, or the like.

An embodiment of this application further provides a chip. The chip includes a processor and a communications interface, and the communications interface is coupled to the processor. The processor is configured to run a program or an instruction of a network side device, to implement various processes of the foregoing data transmission method embodiments, with the same technical effects achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program product. The computer program product includes a processor, a memory, and a program or an instruction stored in the memory and executable on the processor. When the program or the instruction is executed by the processor, the processes in the foregoing data transmission method embodiments are implemented, with the same technical effect achieved. To avoid repetition, details are not described herein again.

It should be noted that, in this specification, the terms "include", "include", or any other variant thereof are intended to cover a non-exclusive inclusion, so that a process, a method, an article, or an apparatus that includes a list of elements not only includes those elements but also includes other elements which are not expressly listed, or further includes elements inherent to such a process, method, article, or apparatus. An element limited by "includes a ..." does not, without more constraints, preclude the presence of additional identical elements in the process, method, article, or apparatus that includes the element. In addition, it should be noted that a scope of the method and the apparatus in the implementations of this application is not limited to: performing a function in a sequence shown or discussed, and may further include: performing a function in a basically simultaneous manner or in a reverse sequence based on an involved function. For example, the described method may be performed in a different order, and various steps may be added, omitted, or combined. In addition, features described with reference to some examples may be combined in other examples.

Based on the descriptions of the foregoing implementations, a person skilled in the art may clearly understand that the method in the foregoing embodiments may be implemented by software in addition to a necessary universal hardware platform or by hardware only. In most cases, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network side device, or the like) to perform the methods in the embodiments of this application.

The embodiments of this application are described above in conjunction with the accompanying drawings, but this application is not limited to the above specific implementations, and the above specific implementations are only illustrative and not restrictive. Enlightened by this application, a person of ordinary skill in the art can make many forms without departing from the purpose of this application and the protection scope of the claims, all of which shall fall within the protection of this application.

## Claims

1. A data transmission method, performed by a terminal, wherein the method comprises:
determining computing power requirement information, wherein the computing power requirement information indicates computing power resource information required when the terminal performs data transmission and/or data processing; and
sending the computing power requirement information to a first network node.

2. The method according to claim 1, wherein the sending the computing power requirement information to a first network node comprises at least one of following:
transmitting the computing power requirement information to the first network node by using a user-plane data packet;
transmitting the computing power requirement information to the first network node by using a non-access stratum NAS message on a control plane; and
transmitting the computing power requirement information to the first network node by using a first computing power sensing layer, wherein the first computing power sensing layer is an upper layer of an NAS layer in the terminal.

3. The method according to claim 2, wherein an application scope of the computing power requirement information comprises at least one of following:
an application data flow;
an application data packet;
a session channel; and
the terminal.

4. The method according to claim 2, wherein the NAS message is a mobility management message or a session management message.

5. The method according to claim 1, wherein the method further comprises:
notifying, through an application layer, the computing power requirement information to a communication layer, and then performing a step of sending the computing power requirement information to the first network node through the communication layer.

6. The method according to claim 5, wherein the notifying, through an application layer, the computing power requirement information to a communication layer comprises at least one of following:
transmitting, by the application layer, the computing power requirement information to an NAS layer by using an AT command;
transmitting, by the application layer, the computing power requirement information by using a data packet header; and
transmitting, by the application layer, the computing power requirement information to the first computing power sensing layer, wherein the first computing power sensing layer is an upper layer of the NAS layer.

7. The method according to claim 2 or 6, wherein in a case that the computing power requirement information is transmitted by using the data packet header, the computing power requirement information is set in a reserved field or an extended field of the data packet header.

8. The method according to claim 1, wherein the determining computing power requirement information comprises:
determining a target computational requirement when the terminal performs the data transmission and/or the data processing;
obtaining a basic computational unit corresponding to the target computational requirement, wherein the basic computational unit is a computational unit supported by the target network node; and
breaking down the target computational requirement based on a type of the basic computational unit to obtain the computing power requirement information.

9. The method according to claim 8, wherein the computing power requirement information comprises the type of the basic computational unit and a computational amount corresponding to the target computational requirement.

10. A data transmission method, performed by a first network node, wherein the method comprises:
receiving computing power requirement information, wherein the computing power requirement information indicates computing power resource information required when a terminal performs data transmission and/or data processing;
selecting a target computing power resource that satisfies the computing power requirement information and/or an identifier of a network element function that satisfies the target computing power resource from a preset computing power resource; and
performing the data processing and/or the data transmission based on the target computing power resource and/or the identifier of the network element function.

11. The method according to claim 10, wherein the receiving computing power requirement information comprises at least one of following:
receiving the computing power requirement information transmitted by using a user-plane data packet;
receiving the computing power requirement information transmitted by using a non-access stratum NAS message on a control plane; and
receiving the computing power requirement information transmitted by using a first computing power sensing layer, wherein the first computing power sensing layer is an upper layer of an NAS layer in the terminal.

12. The method according to claim 11, wherein the NAS message is a mobility management message or a session management message.

13. The method according to claim 11, wherein the receiving the computing power requirement information transmitted by using a first computing power sensing layer comprises:
receiving, through a second computing power sensing layer, the computing power requirement information transmitted by using the first computing power sensing layer, wherein the second computing power sensing layer is an upper layer of an NAS layer in the first network node.

14. The method according to claim 10, wherein the receiving computing power requirement information comprises:
receiving computing power requirement information forwarded by a second network node, wherein the computing power requirement information is sent by the terminal to the second network node.

15. The method according to any one of claims 10 to 14, wherein an application scope of the computing power requirement information comprises at least one of following:
an application data flow;
an application data packet;
a session channel; and
the terminal.

16. The method according to claim 10, wherein before the receiving computing power requirement information, the method further comprises:
sending first information to the terminal, wherein the first information comprises at least one basic computational unit supported by the first network node.

17. The method according to claim 16, wherein the computing power requirement information comprises a type of the basic computational unit and a computational amount corresponding to a target computational requirement, wherein the target computational requirement is a computational requirement when the terminal performs the data transmission and/or the data processing.

18. The method according to claim 10, wherein, before the selecting a target computing power resource that satisfies the computing power requirement information and/or an identifier of a network element function that satisfies the target computing power resource from a preset computing power resource, the method further comprises:
receiving computing power registration/update information sent by a network function; and
performing computing power registration/update on the network function based on the computing power registration/update information.

19. The method according to claim 10, wherein the method further comprises:
collecting statistics of at least one piece of the received computing power requirement information; and
based on a statistical result and a registered computing power resource of each network element function, allocating each network element function and/or a computing power resource corresponding to each network element function.

20. A data transmission apparatus, wherein the apparatus comprises:
a determining module, configured to determine computing power requirement information, wherein the computing power requirement information indicates computing power resource information required when a terminal performs data transmission and/or data processing; and
a first sending module, configured to send the computing power requirement information to a first network node.

21. The apparatus according to claim 20, wherein the first sending module is configured to perform at least one of following:
transmitting the computing power requirement information to the first network node by using a user-plane data packet;
transmitting the computing power requirement information to the first network node by using a non-access stratum NAS message on a control plane; and
transmitting the computing power requirement information to the first network node by using a first computing power sensing layer, wherein the first computing power sensing layer is an upper layer of an NAS layer in the terminal.

22. The apparatus according to claim 21, wherein an application scope of the computing power requirement information comprises at least one of following:
an application data flow;
an application data packet;
a session channel; and
the terminal.

23. The apparatus according to claim 21, wherein the NAS message is a mobility management message or a session management message.

24. The apparatus according to claim 20, wherein the first sending module is further configured to notify, through an application layer, the computing power requirement information to a communication layer, and then perform a step of sending the computing power requirement information to the first network node through the communication layer.

25. The apparatus according to claim 24, wherein the notifying a communication layer of the computing power requirement information by using an application layer comprises at least one of following:
transmitting, by the application layer, the computing power requirement information to an NAS layer by using an AT command;
transmitting, by the application layer, the computing power requirement information by using a data packet header; and
transmitting, by the application layer, the computing power requirement information to the first computing power sensing layer, wherein the first computing power sensing layer is an upper layer of the NAS layer.

26. The apparatus according to claim 21 or 25, wherein in a case that the computing power requirement information is transmitted by using the data packet header, the computing power requirement information is set in a reserved field or an extended field of the data packet header.

27. The apparatus according to claim 20, wherein the determining module is configured to: determine a target computational requirement when the terminal performs the data transmission and/or the data processing; obtain a basic computational unit corresponding to the target computational requirement, wherein the basic computational unit is a computational unit supported by the target network node; and break down the target computational requirement based on a type of the basic computational unit to obtain the computing power requirement information.

28. The apparatus according to claim 27, wherein the computing power requirement information comprises the type of the basic computational unit and a computational amount corresponding to the target computational requirement.

29. A data transmission apparatus, wherein the apparatus comprises:
a receiving module, configured to receive computing power requirement information, wherein the computing power requirement information indicates computing power resource information required when a terminal performs data transmission and/or data processing;
a processing module, configured to select a target computing power resource that satisfies the computing power requirement information and/or an identifier of a network element function that satisfies the target computing power resource from a preset computing power resource; and
a transmission module, configured to perform the data processing and/or the data transmission based on the target computing power resource and/or the identifier of the network element function.

30. The apparatus according to claim 29, wherein the receiving module is configured to perform as least one of following:
receiving the computing power requirement information transmitted by using a user-plane data packet;
receiving the computing power requirement information transmitted by using a non-access stratum NAS message on a control plane; and
receiving the computing power requirement information transmitted by using a first computing power sensing layer, wherein the first computing power sensing layer is an upper layer of an NAS layer in the terminal.

31. The apparatus according to claim 30, wherein the NAS message is a mobility management message or a session management message.

32. The apparatus according to claim 30, wherein the receiving module is configured to receive, through a second computing power sensing layer, the computing power requirement information transmitted by using the first computing power sensing layer, wherein the second computing power sensing layer is an upper layer of an NAS layer in the first network node.

33. The apparatus according to claim 29, wherein the receiving module is configured to receive computing power requirement information forwarded by a second network node, wherein the computing power requirement information is sent by the terminal to the second network node.

34. The apparatus according to claims 29 to 33, wherein an application scope of the computing power requirement information comprises at least one of following:
an application data flow;
an application data packet;
a session channel; and
the terminal.

35. The apparatus according to claim 29, wherein the apparatus further comprises:
a second sending module, configured to send first information to the terminal, wherein the first information comprises at least one basic computational unit supported by the first network node.

36. The apparatus according to claim 35, wherein the computing power requirement information comprises a type of the basic computational unit and a computational amount corresponding to a target computational requirement, wherein the target computational requirement is a computational requirement when the terminal performs the data transmission and/or the data processing.

37. The apparatus according to claim 29, wherein the receiving module is further configured to: receive computing power registration/update information sent by a network function; and perform computing power registration/update on the network function based on the computing power registration/update information.

38. The apparatus according to claim 29, wherein the processing module is further configured to collect statistics of at least one piece of the received computing power requirement information; and based on a statistical result and a registered computing power resource of each network element function, allocate each network element function and/or a computing power resource corresponding to each network element function.

39. A terminal, comprising a processor, a memory, and a program or an instruction stored in the memory and executable on the processor, wherein when the program or the instruction is executed by the processor, steps of the data transmission method according to any one of claims 1 to 9 are implemented.

40. A network side device, comprising a processor, a memory, and a program or an instruction stored in the memory and executable on the processor, wherein when the program or the instruction is executed by the processor, the steps of the data transmission method according to any one of claims 10 to 19 are implemented.

41. A readable storage medium, wherein the readable storage medium stores a program or an instruction, and when the program or the instruction is executed by a processor, the steps of the data transmission method according to any one of claims 1 to 9 are implemented, or the steps of the data transmission method according to any one of claims 10 to 19 are implemented.
